# EUROPEAN PATENT APPLICATION

(11) **EP 2 098 744 A1**
(43) Date of publication of application: **09.09.2009**
(21) Application number: 07858278.0
(22) Date of filing: 22.11.2007
(51) Int. Cl.: F16D 35/00, F16D 57/00

(54) **ADJUSTABLE HYDRAULIC COUPLING SUCH AS A HYDRAULIC BRAKE OR A HYDRAULIC CLUTCH**

(30) Priority: 28.11.2006 ES 200603040; 27.04.2007 ES 200701144
(71) Applicant: Martínez Molina, Felipe, 23400 Úbeda (ES)
(72) Inventor: Martínez Molina, Felipe, 23400 Úbeda (ES)
(74) Representative: Pons Ariño, Angel
(86) International application number: PCT/ES2007/070194
(87) International publication number: WO 2008/065229

(57) **Abstract**

Hydraulic brake, which comprises two main parts, a stator that can be fixed to a support or frame, preferably of a vehicle, and a rotor secured to a rotary part, usually a wheel, in which the stator and the rotor are connected by bearings and leaktight seals, a leaktight chamber being defined between stator and rotor that can be filled with a fluid of appropriate viscosity, provision having been made in both main parts for cavities facing the chamber such that rotation of the rotor successively and simultaneously generates the entry into phase and the offsetting of the cavities thereof with respect to one another, causing variations in volume of the chamber that, in cooperation with the adjustment of the pressure of the fluid filling said chamber, give rise to braking and also adjustment thereof. Meanwhile, provision has been made for communication between the chamber and an exterior element capable of adjusting the pressure of the fluid contained therein.

## Description

### OBJECT OF THE INVENTION

The present invention relates to an adjustable hydraulic coupling, such as a hydraulic brake or a hydraulic clutch, the brake being usable in any type of vehicle, and preferably being very effective in heavy vehicles such as lorries, articulated dump trucks, carriages and such like, while the clutch permits an effective adjustment for the locking of the transmission to be made regardless of the speed, with a constitution which minimises the wear and tear of mechanical elements and a minimal fluid volume.

### BACKGROUND OF THE INVENTION

Currently, direct friction brakes are known, mainly for vehicles, where covers, brake shoes, brake pads or such like actuate by rubbing directly against a track made on a drum or disk; electric brakes where a rotor and a stator are inducer and induced so that the inducer generates an electric field which tends to slow down the relative rotational movement between both; and hydraulic brakes, also known as retarders or intarders, where a turbine is submerged in a fluid, so that setting said fluid in movement in opposite direction to that of the turbine produces a reduction of its velocity.

In the first of the cases, there is very good regulation, and large braking powers can be achieved with the assistance of electric and hydraulic means. However, it has the drawback of the wear and tear produced by the friction, which produces erosion and requires frequent substitutions, also frequently dealing with materials which are harmful to the environment.

The electric brakes are expensive if one desires an efficient regulation, and have the main drawback of not functioning in the event of electrical supply failure. For these reasons, all or nothing emergency brakes are usually used in heavy vehicles such as buses and lorries.

The hydraulic turbine brakes are adjustable hydraulic couplings which have regulation problems as they require a pump capable of supplying continuous flow of fluid, and furthermore an adjustable speed to carry out the regulation of the braking, which results in a greater complexity. Additionally, they produce more wear and tear of the turbine and a quicker degradation of the fluid.

On the other hand, hydraulic couplings are known which are made up of a pump coupled to the drive gear axle shaft and of a turbine coupled to the rear axle shaft. Both elements have half-torus shapes and are placed facing each other inside a casing full of hydraulic fluid, without touching each other. When the drive gear axle shaft rotates a few revolutions the oil leaves the pump and comes into contact with the blades of the turbine, but with little drag capacity. As a consequence, the rear axle does not rotate and the transmission is disengaged.

At medium speeds, the rear axle drag is increased, but with a certain slip, greater when the rotational speed is lower. There is a partial disengagement, which stops when specific revolutions of the driving pin are reached. Then the rear axle rotates at practically the same speed as the motor.

The main drawback of these types of clutches lies in that they can not achieve the rear axle drag at low revolutions of the drive pin. For this reason, their use is usually limited to automatic transmissions.

### DESCRIPTION OF THE INVENTION

The adjustable hydraulic coupling of the invention is constituted by a hydraulic brake or by a hydraulic clutch which resolves the described drawbacks.

In accordance with the invention, the hydraulic brake is constituted by a stator which can be attached to a static support, or to the bodywork or structure of a vehicle, and a rotor solidly joined to a rotating piece, typically a wheel.

Bearings have been included between the stator and the rotor to facilitate their support and mutual rotation. Leaktight seals have also been included, all of this intended to generate a leaktight chamber between both, which is filled with a suitable viscosity fluid.

It has also been provided that both main pieces (stator and rotor) of the invention have cavities facing the chamber and are connected thereto, and which therefore are also filled with the aforementioned fluid.

The regulation of the braking is carried out by varying the pressure of the fluid which fills the chamber. To do that, the chamber is suitably communicated with an exterior pump, for example, of pistons, and actuated by a pedal. This communication is preferably made through the stator, by means of one or more joints, although it could also be implemented in the rotor by means of a rotational connection, or in both, stator and rotor.

For the effects of the pressure variation to be transmitted better, distribution channelling has also been provided which communicates the joint or connection with some or all of the cavities of the piece (stator or rotor) where it is implemented.

The hydraulic brake of the invention comprises two main pieces, in this case independently rotational and aligned axially, connected to each other by means of bushings and/or bearings, and which are respectively intended to attach to the ends of both axle shafts of the transmission.

Each one of these main pieces, in turn, can be constituted by arrays of suitably mounted pieces.

Likewise, according to the invention, the implementation of a leaktight chamber is provided between both main pieces, intended to contain a fluid of suitable viscosity. This chamber further is communicated with an external pressure regulator, which also forms part of the invention.

According to the invention, the implementation of embossing favouring the drag of the fluid is provided in both main pieces, inside of the leaktight chamber, and therefore of the hydraulic coupling between both pieces, which also influences the greater or lesser pressure lent to the fluid through the external regulating element. Therefore, the regulation of the blocking of the clutch is carried out by varying the pressure whereto the fluid is submitted.

Just as in the case of the hydraulic brake, the embossings are preferably implemented by means of radial cavities provided on both pieces, intended to face each other and offset with the relative rotation of both pieces. This produces local variations of the volume distribution of the leaktight chamber.

### BRIEF DESCRIPTION OF THE DRAWINGS

Figure 1 shows a one-quarter cross-sectioned perspective view of the brake of the invention.
Figures 2 and 3 both show longitudinal and diametral cross-sections of the brake of the invention.

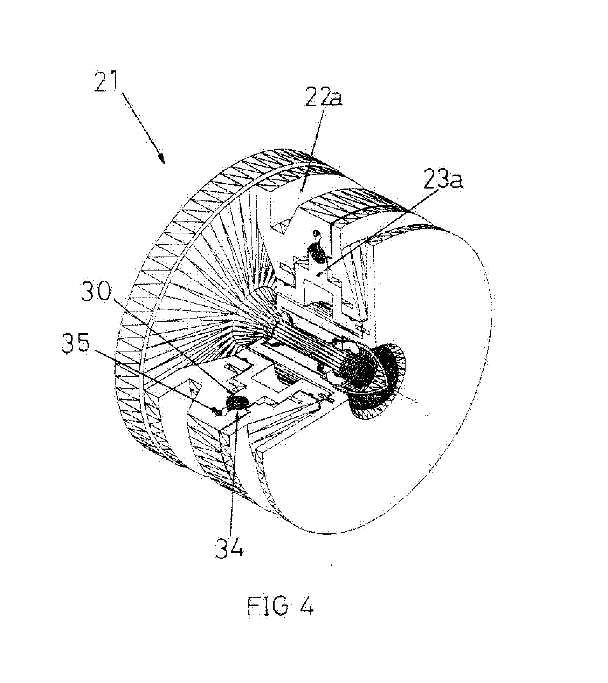

Figure 4 shows a perspective and one-quarter cross-sectioned view of the clutch of the invention.

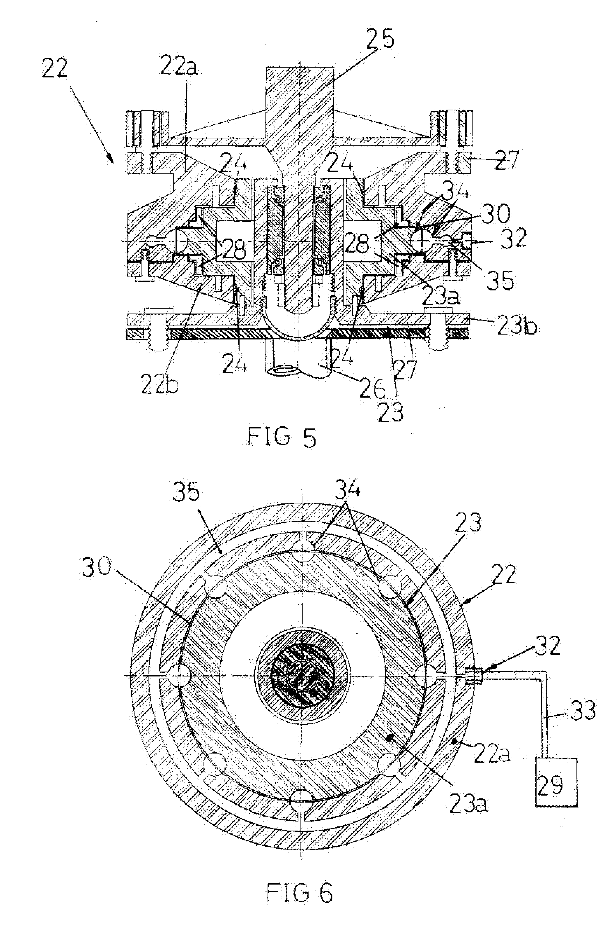

Figure 5 shows a longitudinal cross-section of the clutch according to the configuration shown in figure 4, wherein the transmission axle shafts appear.
Figure 6 shows a diametral cross-section of the brake according to the configuration shown in figure 4.

### DESCRIPTION OF A PRACTICAL EMBODIMENT OF THE INVENTION

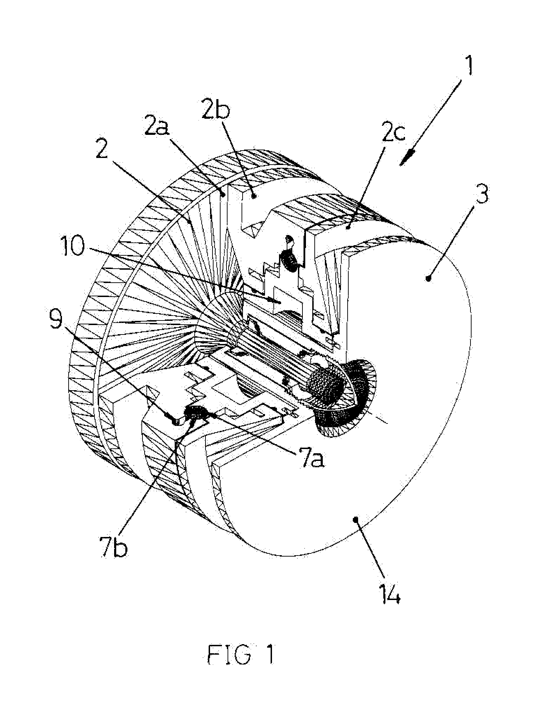

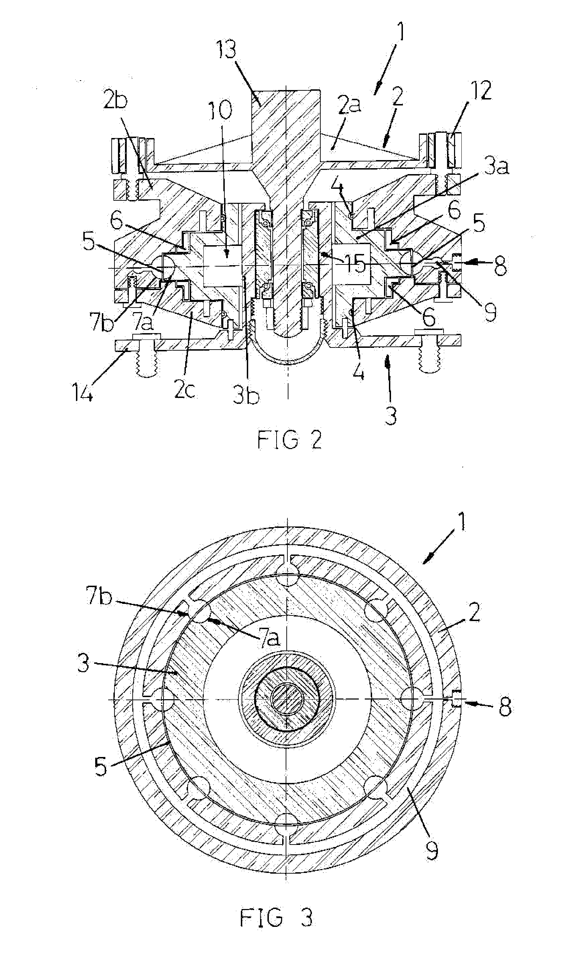

As shown in figures 1, 2 and 3, the hydraulic brake (1) of the invention comprises two main pieces, a stator (2) and a rotor (3), connected by means of bearings (4) so that a leaktight chamber (5) is defined in between them by means of gaskets (6), and which is filled with a fluid of suitable viscosity.

Radial cavities (7a, 7b) facing the chamber (5) are defined both in the stator and in the rotor, and in this example of embodiment, which is in no case limitative, of equal number in both pieces (2 and 3), and separated angularly in the same magnitude, which causes all of the cavities of the rotor to face those of the stator successively and consecutively during the rotation of the rotor. Furthermore, according to this non-limitative example of the invention it has been provided that as the cavities of the rotor and stator face each other, they define spherical spaces, as observed in figures 1, 2 and 3.

The braking is carried out thanks to the friction of the fluid with both pieces as the radial cavities (7a, 7b) face each other and offset with respect to one another, performing the regulation of the braking, increasing and decreasing the pressure of the fluid contained in the chamber (5) by means of exterior means, such as an exterior pump, not represented. Therefore, an exterior connection for this purpose has been implemented, preferably through a joint (8) provided on the stator (2), although it could also be implemented on the rotor (3) by means of a rotating leaktight connection, or in both.

In order to suitably distribute the pressure amongst the different cavities, a distribution channel (9) has also been provided which communicates with the joint (8).

In this example of embodiment of the invention, a removable exterior stator has been provided based on three removable pieces (2a, 2b and 2c) to permit access to the rotor, which is situated in its interior, which is provided with machining (10) to make it lighter.

Anchors or flanges (12) have been provided on the stator (2) to attach it to the support, chassis or structure or the vehicle, as well as a wheel hub (13) to receive an axle or shaft thereof and provide central support to the rotor.

The rotor (3) is also materialised in this example of embodiment of the invention by means of two pieces, one interior (3a) which incorporates the cavities, and another (3b) which is manifested on the exterior in the form of an anchor plate (14) of the wheel or rotating piece, and wherein a support (15) has also been implemented for the wheel hub (13) of the stator (2).

The clutch (21) of the invention comprises two main rotating pieces (22, 23) aligned axially, independently and connected by means of bearings (24), respectively destined to fasten to both axle shafts (25, 26) of the transmission, which the corresponding fastening means (27), for example flanges, are provided.

In this example, the main pieces (22, 23) are both configured by assemblies of other secondary pieces (22a, 22b, 23a, and 23b) which facilitate both the assembly and disassembly and also economize partial substitution costs of the secondary pieces which are the most susceptible to wear and tear.

A leaktight chamber (30) has been defined between both main pieces (22, 23) by means of the corresponding gaskets (28), destined to contain a fluid of suitable viscosity and equipped with connections (32), such as joints and ducts (33), with a element which regulates the pressure of the fluid (29), such as a pump.

Embossings (34), in this example semi-spherical radial cavities, have been defined on both main pieces (22, 23) inside the chamber (30), destined to face each other and offset with respect to one another with the relative rotation of both pieces, causing localised variations of the volume of the chamber or of the distribution of said volume, which in cooperation with the fluid viscosity and the pressure whereto it is submitted, produce a greater or lesser blockage of the clutch.

Furthermore, in this example in the invention, both main pieces (22, 23) have an equal number of cavities and are also angularly spaced.

Also in this example of the invention, distribution channels (35) have been provided which cooperate in the uniform distribution of the pressure applied to the fluid by the chamber (30).

The nature of the invention having been sufficiently described, as well as the way of putting it into practice, it must be pointed out that the aforementioned arrangements represented in the attached drawings can be modified as long as they do not alter the basic principle.

## Claims

1. A Hydraulic brake, comprising two main parts, a stator fixable to a support or chassis, preferably of a vehicle, and a rotor integrated into a rotary part, usually a wheel; **characterised in that** the stator and rotor are linked by bearings and tight seals so that a tight chamber is formed between them which can be filled with a fluid of appropriate viscosity, having provided in both main parts cavities oriented towards the chamber so that when the rotor turns, it successively and simultaneously aligns and offsets the cavities with each other thus causing variations in the chamber volume, which, in combination with the regulation of the pressure of the fluid filling the chamber, enables braking and the regulation of it; there is also provision for connection of the chamber with an external element capable of regulating the pressure of the fluid contained in the chamber is also provided.

2. The hydraulic brake according to claim 1**, characterised in that** the cavities are distributed radially in both main parts.

3. The hydraulic brake according to claim 2, **characterised in that** there are an equal number of radial cavities arranged in both main parts, and distributed equally at angles so that alignment and offsetting during rotation of the rotor is produced simultaneously.

4. The hydraulic brake according to preceding claim 1, **characterised in that** the cavities of the rotor and stator create spaces, preferably spherical, when they are facing each other.

5. The hydraulic brake according to claim 1, **characterised in that** the connection of the chamber with external sources of pressure regulation is ideally achieved using an adapter fitted to the stator.

6. The hydraulic brake according to claim 1, **characterised in that** fluid distribution channels are provided to connect the external pressure-regulation access point fitted to one of the main parts, to its cavities.

7. The hydraulic brake according to claims 1 and 5 **characterised in that** the stator is external and dismountable, and houses the rotor by implementing a hub coupling to an axle and fixing anchors; the rotor is also made up of two parts, an internal one integrating the cavities, and another appearing on the outside in the form of an anchor plate on the rotary part, and on which a support for the stator axle housing has also been implemented.

8. Clutch, according to claim 7, **characterized in that** said cavities (34) adopt a semi-spherical shape.

9. Clutch, according to claims 7 or 8, **characterized in that** the cavities (34) are radially distributed in the two main parts (22, 23).

10. Clutch, according to claim 9, **characterized in that** it has an identical number of cavities (34) distributed in the two main parts (22, 23).

11. Clutch, according to claim 10, **characterized in that** the cavities (34) are distributed at identical angular distances.

12. Clutch, according to claim 7, **characterized in that** it includes seals (28) to waterproof the chamber (30).

13. Clutch, according to claim 7, **characterized in that** the external connection (32) of the watertight chamber (30) with the regulating element (29) is materialized by means of, at least, one joint nut.

14. Clutch, according to claim 7, **characterized in that** the main parts (22, 23) have fixing means (27) that fix them to the corresponding semi-axles of the transmission.

15. Clutch, according to claim 7, **characterized in that** one or both main parts (22, 23) are comprised of different secondary parts (22a, 22b, 23a, 23b) coupled to each other in order to expedite assembly and maintenance thereof.

16. Clutch, according to any of claims 7 to 15**, characterized in that** the distribution channel (35) is defined in one of the main parts (22), is concentric with the chamber (30) and communicates the external pressure element (29) with the cavities (34) of said main part (22).

17. Clutch, according to claim 8, **characterized in that** one or both main parts (22) and (23) are comprised of (27) to the corresponding semi-axles of the transmission.

18. Clutch, according to claim 8, **characterized in that** one or both main parts (22,23) are comprised of different secondary parts (22a, 22b, 23a, 23b) coupled to each other in order to expedite assembly and maintenance thereof.
